# EUROPÄISCHE PATENTSCHRIFT

(11) **EP 2 558 696 B1**
(45) Veröffentlichungstag und Bekanntmachung des Hinweises auf die Patenterteilung: **08.04.2015**
(21) Anmeldenummer: 11711001.5
(22) Anmeldetag: 28.02.2011
(51) Int. Cl.: F02B 19/12, F02M 25/12, F02M 25/07, F02B 43/12

(54) **VERFAHREN ZUM BETREIBEN EINER BRENNKRAFTMASCHINE**
METHOD FOR OPERATING AN INTERNAL COMBUSTION ENGINE
PROCÉDÉ DE FONCTIONNEMENT D'UN MOTEUR À COMBUSTION INTERNE

(30) Priorität: 14.04.2010 AT 5922010
(43) Veröffentlichungstag der Anmeldung: 20.02.2013
(73) Patentinhaber: GE Jenbacher GmbH & Co OG, 6200 Jenbach (AT)
(72) Erfinder: GRUBER, Friedrich, A-6283 Hippach (AT); WALL, Guenther, A-6323 Bad Häring (AT)
(74) Vertreter: Gangl, Markus
(86) Internationale Anmeldenummer: PCT/AT2011/000095
(87) Internationale Veröffentlichungsnummer: WO 2011/127494

(56) Entgegenhaltungen:
- DE-A1- 10 356 192
- DE-A1-102008 015 744
- GB-A- 2 073 317
- JP-A- 2005 240 586

## Beschreibung

Die Erfindung betrifft ein Verfahren zum Betreiben einer Brennkraftmaschine, insbesondere eines vorkammergezündeten Gas-Otto-Motors, wobei der Vorkammer von außen ein Gas-Gemisch als Spülgas zugeführt wird

Die Erfindung ist zum Beispiel anwendbar bei einer Brennkraftmaschine, insbesondere einem vorkammergezündeten Gas-Otto-Motor, umfassend einen Brennraum, der einen Treibstoffeinlass und einen Treibstoffauslass aufweist, der in einen Abgastrakt mündet, wobei eine Vorkammer vorgesehen ist, in der eine Zündeinrichtung anordenbar ist, mit der ein Treibstoff-Luft-Gemisch in der Vorkammer zündbar ist, wobei ein Fluideinlass vorgesehen ist, der in die Vorkammer mündet.

Bei ottomotorisch betriebenen Brennkraftmaschinen erfolgt die Zündung eines Treibstoff-Luft-Gemischs im Brennraum durch Zündeinrichtungen, wobei die Gemischentflammung meist durch einen Funkenüberschlag an den Elektroden einer Zündkerze eingeleitet wird. Insbesondere bei Gasmotoren, bei denen ein Treibgas-Luft-Gemisch entzündet wird, setzt man bei größeren Brennraumvolumina das Magerkonzept ein. Dies bedeutet, dass ein relativ großer Luftüberschuss vorhanden ist, wodurch bei maximaler Leistungsdichte und gleichzeitig hohem Wirkungsgrad des Motors die Schadstoffemission sowie die thermische Belastung der Bauteile möglichst gering gehalten wird. Die Zündung und Verbrennung sehr magerer Treibstoff-LuftGemische stellt dabei eine erhebliche Herausforderung für die Entwicklung bzw. den Betrieb moderner Hochleistungsgasmotoren dar.

Ab einer gewissen Baugröße der Gasmotoren (meist etwa oberhalb von sechs Litern Hubraum) ist es erforderlich, Zündverstärker einzusetzen, um die entsprechend großen Flammwege in den Brennräumen der Zylinder in möglichst kurzer Zeit zu durchlaufen. Als solche Zündverstärker dienen üblicherweise Vorkammern, wobei das am Ende des Kompressionshubes hoch verdichtete Treibstoff-Luft-Gemisch in einem vom Hauptbrennraum des Zylinders abgeteilten relativ kleinen Nebenraum gezündet wird. Dabei wird ein Hauptbrennraum vom Arbeitskolben, der Zylinderlaufbuchse und dem Zylinderkopfboden begrenzt, wobei der Nebenraum (die Vorkammer) durch ein oder mehrere Überströmbohrungen mit dem Hauptbrennraum verbunden ist. Häufig werden solche Vorkammern während der Ladungswechselphase mit Treibgas gespült bzw. gefüllt, um das Treibstoff-Luft-Gemisch anzufetten und damit die Verflammungs- und Verbrennungseigenschaften zu verbessern. Dazu wird eine kleine Treibgasmenge von der Treibgaszuführung zum Hauptbrennraum abgezweigt und über eine geeignete, mit einem Rückschlagventil versehene Zufuhreinrichtung in die Vorkammer eingeleitet. Diese Treibgasmenge spült während des Ladungswechsels die Vorkammer und wird deshalb oft als Spülgas bezeichnet.

Während der Kompressionsphase strömt das sehr magere Treibstoff-Luft-Gemisch des Hauptbrennraumes durch die Überströmbohrungen in die Vorkammer und vermischt sich dort mit dem Spülgas. Das Verhältnis von Treibstoff zu Luft im Gemisch wird in Form der Luftüberschusszahl λ angegeben. A = 1 bedeutet dabei, dass die im Gemisch vorhandene Luftmenge genau jener Menge entspricht, die erforderlich ist, um eine vollständige Verbrennung der Treibstoffmenge zu ermöglichen. Die Verbrennung erfolgt in einem solchen Fall stöchiometrisch. Große Gasmotoren, werden bei Volllast üblicherweise mager bei einem λ von ca. 1,9 bis 2,0 betrieben, das heißt die Luftmenge im Gemisch ist etwa doppelt so hoch der stöchiometrischen Luftmenge. Durch die Spülung der Vorkammer mit Treibgas ergibt sich nach Vermischung mit dem Treibgas-Luft-Gemisch aus dem Hauptbrennraum ein mittleres λ in der Vorkammer von ca. 0,8 bis 0,9. Damit ergeben sich optimale Entflammungsbedingungen und aufgrund der Energiedichte intensive, in den Hauptbrennraum austretende Zündfackeln, die zu einem raschen Durchbrennen des Treibstoff-Luft-Gemischs im Hauptbrennraum führen. Bei solchen λ-Werten erfolgt die Verbrennung allerdings auf maximalem Temperaturniveau, sodass auch die Wandtemperaturen im Vorkammerbereich entsprechend hoch sind.

Aus der DE 10 2008 015 744 A1 geht eine Brennkraftmaschine hervor, bei welcher einer Vorkammer Abgas zugeleitet wird. Aufgabe dieser Schrift ist es, Frühzündungen zu vermeiden, indem durch Einbringung von Abgas über eine separate Düse in die Vorkammer die Luftüberschusszahl λ soweit erhöht wird, dass das Gemisch nicht mehr zündfähig ist. Dies ist darauf zurückzuführen, dass es sich bei der hier gezeigten Vorkammer um eine Einrichtung zur Selbstzündung mit einer Glühzündeinrichtung handelt und bei solchen Systemen eine vorzeitige Zündung verhindert werden muss.

Die DE 103 56 192 A1 hat es sich zur Aufgabe gemacht, zum Ausgleich von Schwankungen in der Gasqualität Wasserstoff zu verwenden.

Mit zunehmender Steigerung der Motorleistung sowie durch die Maßnahmen zur Steigerung des Wirkungsgrades kommt es vermehrt zu Rußbildung in der Vorkammer. Der daraus resultierende Rußgehalt im Motorabgas führt zur Beeinträchtigung des Wärmeübergangs im Abhitzekessel sowie zu Problemen bei der bestimmten Anwendung von Gasmotoren, beispielsweise zur CO₂-Düngung von Gewächshäusern.

Eine Möglichkeit zur Vermeidung der Rußbildung besteht darin, das Treibstoff-Luft-Gemisch in der Vorkammer abzumagern und durch einen leichten Sauerstoffüberschuss den freien Kohlenstoff zu oxidieren. Dabei ergeben sich jedoch andere Probleme, die damit zusammenhängen, dass überschüssiger Sauerstoff bei den sehr hohen Verbrennungstemperaturen knapp über A = 1 zur Heißkorrosion an kritischen Stellen in der Vorkammer, insbesondere an den Überströmbohrungen sowie an den Zündkerzenelektroden, führen kann.

Aufgabe der vorliegenden Erfindung ist es, hier Abhilfe zu schaffen und die Rußbildung sowie die Heißkorrosion zu vermeiden:

Diese Aufgabe wird gelöst durch ein Verfahren zum Betreiben einer Brennkraftmaschine gemäß Anspruch 1. Erfindungsgemäß wird der CO₂-Gehalt des Spülgases (Gas-Luft-Gemisch) in der Vorkammer vor der Zündung in einer definierten Weise eingestellt, in der Regel aber erhöht. Zusätzlich wird dem Spülgas Wasserstoff beigemengt.

Der CO₂-Gehalt des Spülgases kann sich bevorzugt in einem Bereich größer als 0,039 % (390 ppm) und kleiner als ca. 30 % bewegen.

Die Grenzen für den CO₂-Gehalt im Spülgas können abhängig von der Motorleistung festgelegt werden, zum Beispiel oberhalb von 75 % Motorleistung ein CO₂-Gehalt von mehr als 10 % und/oder unterhalb von 25 % Motorleistung ein CO₂-Gehalt von weniger als 5 %.

Der Lösungsvorschlag sieht vor, dass die Vorkammer mit Spülgas gespült wird, wobei durch eine geeignete Zusammensetzung des Spülgases das Verbrennungsverhalten des Gas-Luft-Gemischs in der Vorkammer in einer Weise beeinflusst wird, dass insbesondere die Rußbildung unterdrückt wird. Diese Eigenschaft kann dann erreicht werden, wenn dem Spülgas CO₂ zugesetzt wird. Hierbei ist einerseits denkbar, dass CO₂ als Reingas oder Gasgemisch mit einem entsprechenden CO₂-Gehalt zugeführt wird. Andererseits wäre es aber auch denkbar, dass das CO₂ aus dem Abgas der Brennkraftmaschine stammt. Insbesondere die Variante, das CO₂ durch Abgasrückführung aus dem Abgas zu entnehmen, hat den Vorteil, dass keine gesonderte CO₂-Quelle erforderlich ist.

Die Steuerung oder Regelung des CO₂-Gehalts kann durch die Motorsteuerung erfolgen.

Um die Zündeigenschaften des Treibstoff-Luft-Gemischs allerdings nicht maßgeblich zu verschlechtern, ist es notwendig, zusätzlich zum CO₂ eine bestimmte Menge H2 beizumischen. Dabei ist das Verhältnis von CO₂ zu H₂ vorteilhafterweise so einzustellen, dass die mit einer CO₂-Erhöhung in der Regel verbundene Verschlechterung der Verbrennungseigenschaften des Gasgemischs in der Vorkammer kompensiert wird. Eine genaue Dosierung und Regelung der Zusammensetzung des Spülgases für einen optimalen Betrieb der Brennkraftmaschine ist daher günstig.

Da eine eigene Versorgung der Brennkraftmaschine mit einem abgestimmten CO₂- zu H₂-Gemisch beispielsweise aus einem Gastank kostenaufwändig ist, kann vorteilhafterweise vorgesehen sein, dass durch thermochemische Veränderung eines Gemisches vorhandener Stoffströme eine ideale oder günstige Zusammensetzung des Spülgases hergestellt wird.

Bei Gasmotoren vorhandene Stoffströme, die für diesen Zweck genutzt werden können, sind beispielsweise das Treibgas, die Ansaugluft und Motorabgas.

Die geeignete thermochemische Veränderung der Gaszusammensetzung kann beispielsweise durch partielle Oxidation unter Beisein bestimmter Katalysatoren erzielt werden. Ein Nachteil der partiellen Oxidation für die vorgesehene Anwendung ist die hohe Bildungsrate von Kohlenmonoxid, die zu Lasten des gewünschten Kohlendioxids geht. Zur Beseitigung dieses Nachteils sowie zur Verbesserung der Einstellbarkeit der chemischen Reaktion und der Flexibilität der Einrichtung wird vorgeschlagen, einen geringen Teil des Motorabgases zusätzlich zum verwendeten Treibgas und zu einem bestimmten Luftanteil sowie zu einer Wasserdampfmenge als Eingangsstoff in den thermochemischen Reaktor zu verwenden. Der thermochemische Reaktor kann dabei ein Dampf-Reformer sein.

Die optimale Zusammensetzung des Spülgases hängt unter anderem vom Lastzustand des Motors ab. Bei Volllast sollte das Verhältnis von CO₂ zu H2 günstigerweise größer als 0,5 sein, bei Start und geringer Teillast kleiner als 0,5 sein.

Mit der thermochemischen Einrichtung auf Basis der angeführten Eingangsstoffströme kann die gewünschte Zusammensetzung' dadurch erreicht werden, dass das λ für die partielle Oxidation sowie die Verhältnisse der Stoffströme von Gas, Luft, Wasserdampf und Abgas zueinander entsprechend abgestimmt werden. Da im Abgas ohnehin eine gewisse Wasserdampfmenge vorhanden ist, kann dadurch die Menge des extern erzeugten H₂O-Dämpfes entsprechende reduziert werden.

Die Verfahrensführung sowie die verwendeten Katalysatoren sind, wie dem Fachmann geläufig, auf den gewünschten Zweck auszulegen. Neben der partiellen Oxidation wären grundsätzlich auch andere Verfahren denkbar bzw. möglich, die zur gewünschten Gaszusammensetzung für das Spülgas führen.

An Sensorik im Falle einer Regelung kann ein Sensor für CO₂ ausreichend sein. Bevorzugt sind noch Sensoren für Wasserstoff und/oder Kohlenmonoxid vorhanden.

Weitere Vorteile und Details werden unter Zuhilfenahme der nachfolgenden Figuren und Figurenbeschreibungen erläutert.

Es zeigt:
- Fig. 1: eine schematische Darstellung einer Brennkraftmaschine bzw. eines erfindungsgemäßen Verfahrens im Querschnitt,
- Fig. 2: einen schematischen Aufbau eines thermochemischen Reaktors sowie
- Fig. 3: einen schematischen Aufbau der Brennkraftmaschine samt Reaktor.

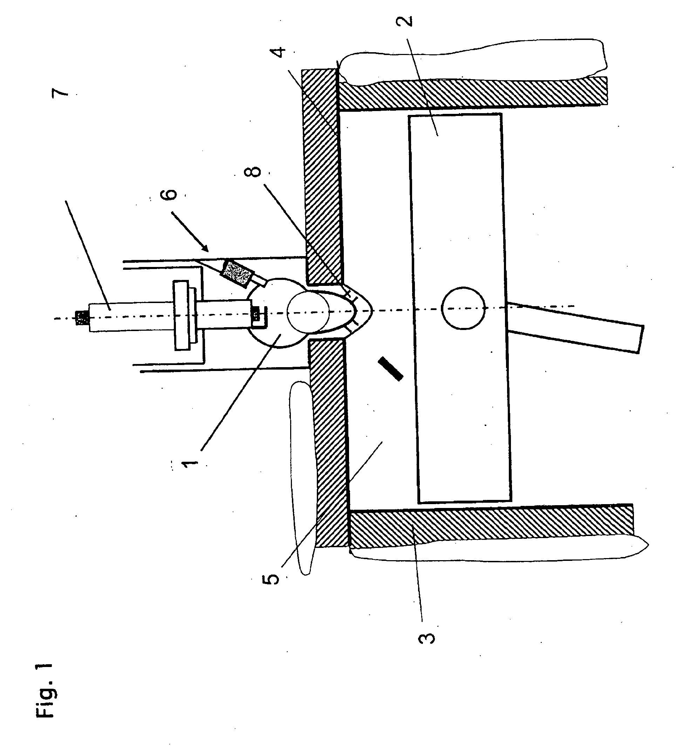

Fig. 1 zeigt im Querschnitt einen Zylinder einer Brennkraftmaschine in Form eines Gasmotors umfassend eine Zylinderlaufbuchse 3, in der ein Kolben verschiebbar gelagert ist. Zwischen Zylinderkopfboden 4, Zylinderlaufbuchse 3 und Kolben 2 wird der Hauptbrennraum 5 gebildet, in dem die Hauptmenge an Treibgas-Luft-Gemisch verbrannt wird. Hierfür wird durch Einlassventile, die nicht gezeigt sind, Treibstoff und Luft eingelassen. Im Zuge des Kompressionstaktes strömt ein Teil dieses Gemisches über die Überströmbohrungen 8 in die Vorkammer 1, in die eine Zündkerze 7 mündet.

Herkömmlicherweise kann hier auch noch eine zusätzliche Treibgaszufuhr vorgesehen sein. Beim Stand der Technik erfolgt anschließend die Zündung des Gemischs in der Vorkammer 1 über die Zündkerze 7. Über die Überströmbohrungen 8 treten Zündfackeln aus, die das verdichtete Treibstoff-Luft-Gemisch im Hauptbrennraum 5 zünden und den Arbeitstakt des Zylinders einleiten.

Die Zuführung 6 ist dafür vorgesehen, ein Brenngas oder ein Brenngas-Luft-Gemisch gesondert vom Haupt-Gas/Luft-Gemisch der Vorkammer zuzuführen, wobei damit die Vorkammer größtenteils von den verbrannten Restgasen des vorangegangenen Arbeitstaktes freigespült wird.

Erfindungsgemäß wird über diese, den Stand der Technik darstellende Spülgaszufuhr, zusätzlich zum Brenngas oder dem Brenngas-Luftgemisch eine definierte CO₂-Menge zur Vermeidung der Rußbildung in die Vorkammer eingeleitet.

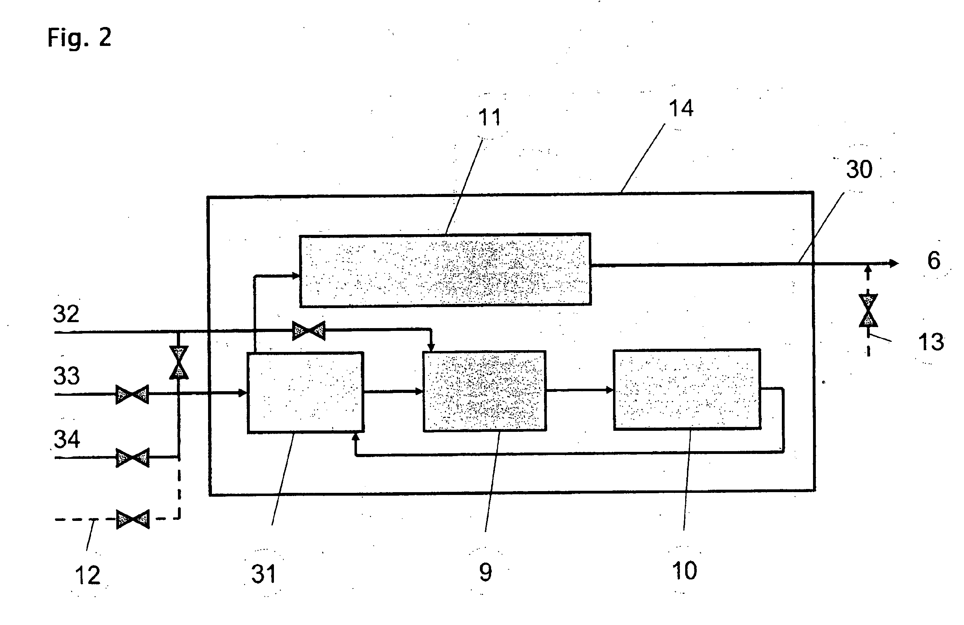

In einer bevorzugten Ausführungsvariante ist die Zuführung 6 in die Vorkammer allerdings mit einem thermochemischen Reaktor gemäß Fig. 2, mit dem die erwünschte CO₂-Menge aus dem Brenngas sowie weiteren Reaktanden erzeugt wird, verbunden. Der thermochemische Reaktor 14 hat einen Ausgang 30, der in die Zuführung 6 der Vorkammer 1 mündet. Weiters beinhaltet der thermochemische Reaktor Einlässe für Treibgas 32, Luft 33, Wasserdampf 34 und Motorabgas 35. Über einzelne Ventile, die steuerbar sind, können diese Zulässe bestimmte Mengen an Gas abgeben, die dann in den thermochemischen Reaktor 14 eingebracht werden. Den thermochemischen Reaktor 14 werden die an der Reaktion beteiligten Stoffströme an Treibgas, Luft, Wasserdampf und Motorabgas in getrennten, mit Dosiereinrichtungen versehenen Regel- und Steuerventilen versehenen Leitungen zugeführt. Nach Vermischung der Stoffströme erfolgt im Gegenstrom-Wärmetauscher 31 eine Erwärmung dieses Gemischs auf ca. 600 °C. Anschließend erfolgt in einer Vorreaktionskammer 9 eine Überhitzung auf ca. 850 °C. In der Vorreaktionskammer sind Katalysatoren beispielsweise aus Nickel vorgesehen. Bei dieser Temperatur gelangt das Gasgemisch anschließend in die Reformierstufe 10, wo weitere Reaktionsschritte ablaufen. Das aus der Reformierstufe 10 mit etwa 700 °C austretende Produktgas wird zurückgeleitet zum Gegenstrom-Wärmetauscher 31, wo es das eintretende Gemisch erwärmt. Nach der Kühlung wird das Produktgas verdichtet, getrocknet und den Vorkammern zugeführt.

Je höher der Wasserdampfanteil im Gasgemisch am Reaktoreintritt ist, desto stärker verlagert sich das Reaktionsgleichgewicht auf die Seite von H₂ und CO₂ zu Lasten von CO und desto geringer ist die Gefahr der Verrußung der Katalysatoroberfläche. Gleiches bewirkt die Abgasmenge. Das Abgas hat gegenüber der Verwendung von Wasserdampf neben den chemischen auch energetische Vorteile, sodass im Idealfall durch die Verwendung von Abgas auf die Zudosierung von Wasserdampf verzichtet werden kann.

Das Motorabgas setzt sich üblicherweise zusammen aus den Komponenten Wasserdampf mit etwa 11 vol%, CO₂ mit ca. 5 vol%, O₂ mit ca. 10 vol%. Der Rest ist Stickstoff und andere Spurenkomponenten.

Im Abgas sind Wasserdampf und Luft bereits vorhanden, sodass die entsprechenden Stoffströme über die Zufuhr 33, 34 reduziert werden können. Darüber hinaus kann das Abgas bei Brennkraftmaschinen mit einem Abgasturbolader vor der Abgasturbine bei hohem Druck und hoher Temperatur entnommen werden, wodurch sich erhebliche energetische Vorteile ergeben.

Erfindungsgemäß hat es sich als günstig erwiesen, wenn die dem Reaktor 14 zugeführte Gasmenge etwa 1 bis 2 vol% der gesamten Treibgasmenge des Motors betragen. In Relation dazu beträgt die dem Reaktor zugeführte Abgasmenge etwa das 0 bis Zweifache dieses Gasvolumenstroms.

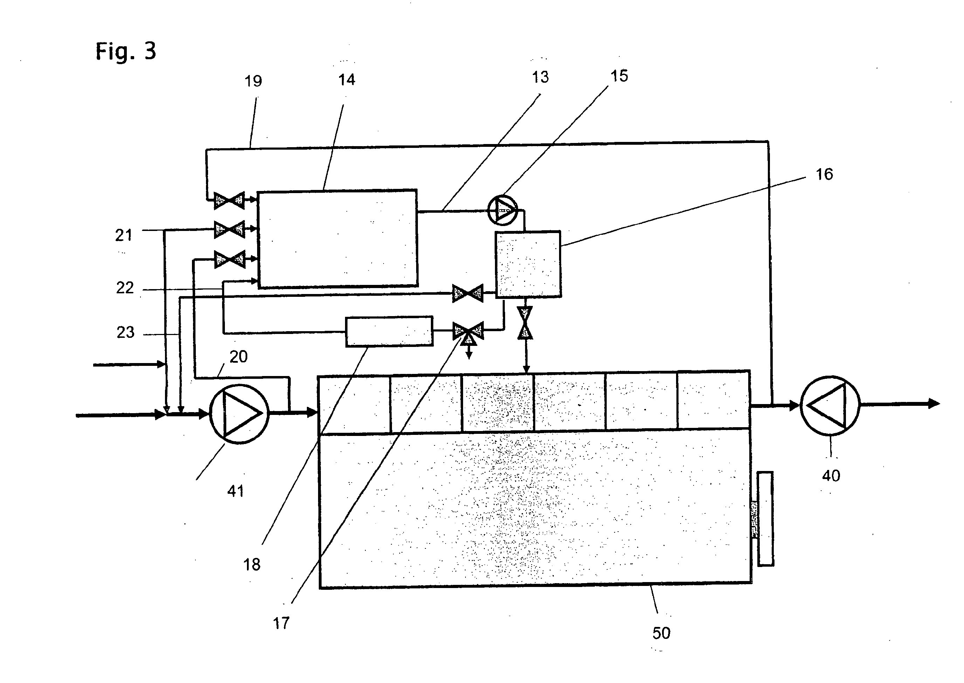

In der Fig. 3 ist schematisch eine Brennkraftmaschine dargestellt mit einem thermochemischen Reaktor 14 sowie den entsprechenden Leitungsführungen und Zuleitungen. Dem thermochemischen Reaktor 14 werden die verschiedenen Stoffströme über entsprechende Dosier- und Mischeinrichtungen zugeführt. Über Leitung und Dosierventil 21 wird der Hauptteil des für die Vorkammerspülung vorgesehenen Brenngases zum Reaktor geführt. Der restliche Teil gelangt über die Gas-Luft-Führung 20 zum thermochemischen Reaktor, mit der auch der Luftanteil zugeführt wird. Über die Zuführleitung 19 wird die Abgasmenge eingebracht und über die Leitung 22 der erforderliche Wasserdampfanteil bereit gestellt. Das Produktgas wird durch Verdichter 15 auf den zur Spülung der Vorkammern erforderlichen Druck verdichtet und zu einem Puffervolumen 16 geleitet. In diesem erfolgt eine Kondensatabscheidung 17 und die Weiterführung zu den Vorkammern sowie zu einem geringen Teil zum Motoreintritt vor einem Abgasturboladerverdichter. Der Wasserdampfanteil wird nach Verdampfung des Kondensats 18 in den Reaktor eingeleitet.

Das erforderliche Mengenverhältnis der Stoffströme hängt, wie bereits ausgeführt, von unterschiedlichen Parametern ab, zum Beispiel von der Motorlast, der Zusammensetzung des Treibgases sowie von der konkreten Ausführung und Betriebsweise der Reformiereinrichtung (zum Beispiel Temperaturniveau und Katalysatormaterial).

Der in den thermochemischen Reaktor eingebrachte Wasserdampf wird nur zu einem geringen Teil chemisch aufgebraucht. Der überwiegende Teil verlässt mit dem Reformgas den Reformer und wird nach dem Kühler auskondensiert und dem Reformprozess im Kreislauf wieder zugeführt.

Über das Verhältnis des zudosierten Abgases zum zu reformierenden Treibgas kann das Verbrennungsverhalten der Brennkraftmaschine beeinflusst werden. Bei höherem Abgasanteil wird die Verbrennung in der Vorkammer kühler und der Zündimpuls in den Hauptbrennraum schwächer. Damit kann zum Beispiel die Brenndauer erhöht und unter Inkaufnahme eines etwas schlechteren Wirkungsgrades der Brennkraftmaschine dadurch etwas klopffester und der maximale Zylinderdruck reduziert werden. Dieser Effekt kann wünschenswert sein, zum Beispiel zur optimalen Anpassung des Brennverlaufs an Brenngase mit zeitlich veränderlicher Klopffestigkeit oder zur Darstellung von zeitlich begrenztem Überlastbetrieb, zum Beispiel zur Spitzenlastabdeckung.

Der bevorzugte Lösungsvorschlag sieht weiters vor, dass der vom Motormanagementsystem erfasste Betriebszustand der Brennkraftmaschine sowie die durch geeignete Gassensoren am Austritt des Reaktors ermittelte Gaszusammensetzung zur Dosierung der Stoffströme in den Reaktor herangezogen werden. Zur Messung der Gaszusammensetzung werden Sensoren für die Gaskomponenten Wasserstoff, Kohlenmonoxid und Kohlendioxid verwendet, wobei die Messung von CO₂ bereits ausreichend sein kann.

Neben den oben angeführten Stoffströmen kann darüber hinaus auch ein weiterer bzw. zusätzlicher Stoffstrom dem thermochemischen Reaktor 14 zugeführt werden. Dies kann beispielsweise ein brennbares Medium, zum Beispiel ein gasförmiger oder flüssiger Kraftstoff, oder auch eine externe CO₂-Quelle sein.

Die Zuführung eines separaten Brenngases erweist sich besonders dann als vorteilhaft, wenn ein sehr heizwertschwaches Brenngas als Haupttreibstoff für den Motor vorliegt. In diesen Fällen würde die Verwendung des Treibgases der Brennkraftmaschine als Ausgangsbasis für die thermochemische Stoffumwandlung im thermochemischen Reaktor 14 ungünstige Verbrennungseigenschaften in den Vorkammern ergeben. Durch Verwendung von heizwertstarken und zum Beispiel zur besseren Lagerhaltung in flüssiger Form vorliegenden Brennstoffen kann ein relativ heizwertstarkes Reformgas mit guten Verbrennungseigenschaften erzeugt werden

Die Erzeugung eines optimal zusammengesetzten Spülgases, unabhängig von der Beschaffenheit des Haupt-Brenngases, ermöglicht eine deutlich bessere Nutzbarkeit von sehr heizwertschwachen Treibgasen. Als heizwertschwache Treibgase können zum Beispiel Gichtgas oder Hochofengase genannt werden. Als alternative Spülgastreibstoffe können beispielsweise Dieselkraftstoff oder Heizöl, LPG (Butan oder Propan) oder biogene Brennstoffe wie Ethanol oder Methanol verwendet werden.

Zur Stabilisierung und einfacheren bzw. betriebssicheren Regelung und Steuerung des thermochemischen Prozesses im Reaktor ist es vorteilhaft, eine größere Produktgasmenge im Reaktor zu erzeugen, als zur Spülung der Vorkammern erforderlich ist, und die überschüssige Menge dem Motor zusammen mit der Verbrennungsluft und mit der Hauptgasmenge zuzuführen. Dies erfolgt über die Leitung 23.

In der Figur 3 ist erkennbar, dass es sich bei der Brennkraftmaschine 15 um eine gemischaufgeladene Brennkraftmaschine mit einem Abgasturbolader handelt. Der Abgasturbolader besteht aus einer Abgasturbine und einem Verdichter, die über eine gemeinsame Welle miteinander verbunden sind. In den Abgasturboladerverdichter 41 mündet einerseits Treibgas und andererseits Luft, sowie der Ausgang aus dem Pufferspeicher 16. Bei der Steuerung und Regelung des thermochemischen Prozesses zur Erzeugung von Spülgas mit geeigneter Zusammensetzung ist bevorzugt ein Volumenverhältnis von CO₂ zu H2 in einem Bereich zwischen 70:30 und 40:60 anzustreben, um die Rußbildung minimal zu halten.

## Patentansprüche

1. Verfahren zum Betreiben eines vorkammergezündeten Gas-Otto-Motors, wobei der Vorkammer von außen ein Gas-Gemisch als Spülgas zugeführt wird, dessen CO₂-Gehalt gesteuert oder geregelt wird und wobei dem Spülgas zusätzlich Wasserstoff beigemengt wird.

2. Verfahren nach Anspruch 1, **dadurch gekennzeichnet, dass** das CO₂ ganz oder teilweise aus dem Abgas der Brennkraftmaschine stammt.

3. Verfahren nach Anspruch 1, **dadurch gekennzeichnet, dass** das CO₂ ganz oder teilweise in einem thermo-chemischen Reaktor erzeugt wird.

4. Verfahren nach einem der Ansprüche 1 bis 3, **dadurch gekennzeichnet, dass** der Wasserstoff durch einen Dampf-Reforming-Prozess erzeugt wird.

5. Verfahren nach Anspruch 4, **dadurch gekennzeichnet, dass** CO₂ aus dem Abgas der Brennkraftmaschine gemeinsam mit Treibstoff dem Dampf-Reforming-Prozess zugeführt wird.

## Claims

1. A method of operating a gas Otto cycle engine with prechamber ignition, wherein a gas mixture is fed to the prechamber from the exterior as scavenging gas, whose CO₂ content is controlled or regulated and wherein hydrogen is additionally added to the scavenging gas.

2. A method as set forth in claim 1 **characterised in that** the CO₂ entirely or partially originates from the exhaust gas of the internal combustion engine.

3. A method as set forth in claim 1 **characterised in that** the CO₂ entirely or partially is produced in a thermochemical reactor.

4. A method as set forth in one of claims 1 through 3 **characterised in that** the hydrogen is produced by a steam reforming process.

5. A method as set forth in claim 4 **characterised in that** the CO₂ is fed to the steam reforming process from the exhaust gas of the internal combustion engine together with fuel.

## Revendications

1. Procédé de fonctionnement d'un moteur Otto à allumage dans une antichambre de combustion, dans lequel un mélange de gaz est amené en tant que gaz de balayage de l'extérieur à l'antichambre de combustion, dont la teneur en CO₂ est commandée ou réglée et dans lequel de l'hydrogène est incorporé en complément au gaz de balayage.

2. Procédé selon la revendication 1, **caractérisé en ce que** le CO₂ provient totalement ou partiellement du gaz d'échappement du moteur à combustion interne.

3. Procédé selon la revendication 1, **caractérisé en ce que** le CO₂ est produit totalement ou partiellement dans un réacteur thermochimique.

4. Procédé selon l'une des revendications 1 à 3, **caractérisé en ce que** l'hydrogène est produit par un processus de reformage à la vapeur.

5. Procédé selon la revendication 4, **caractérisé en ce que** le CO₂ provenant du gaz d'échappement du moteur à combustion interne est amené en commun avec du carburant au processus de reformage à la vapeur.
